# EUROPEAN PATENT APPLICATION

(11) **EP 1 695 863 A1**
(43) Date of publication of application: **30.08.2006**
(21) Application number: 05380017.3
(22) Date of filing: 01.02.2005
(51) Int. Cl.: B60N 2/26

(54) **Safety and coupling system for babies and children in vehicles**

(71) Applicant: Lopez Alonso, José, 02600 Villarrobledo (Albacete) (ES)
(72) Inventor: Lopez Alonso, José, 02600 Villarrobledo (Albacete) (ES)

(57) **Abstract**

**TITTLE.-** Safety and coupling system for children and babies in vehicles.

**PURPOSE.-** To place both children and babies in a seat inserted in the vehicle that also allows an adult person to sit on it when required.

**DESCRIPTION.-** The system is obtained by opening a part of the back seat of the vehicle to get space enough to place babies and children.

**APPLICATIONS.-** Vehicles for the transportation of people.

**TECHNICAL SOLUTION.-** By reclining a part of the back seat of the vehicle we get that a child travels coupled at the seat in the same way that an adult person although adapted to the measurements of the child.

The system includes its own safety belt.

**OPTIONS.-** The system allows to travel in the same place to both children and adult people.

## Description

### Technique sector.

Nowadays, location and safety of travellers in vehicles are getting more and more studied, with the purpose of feeiing safer and more comfortable with regard to any accidents.
One of the studied sides in a more precise way is to get that both babies and children can travel as integrated as possible through chairs which fit together with the back seat of the vehicle, and tight by the safety belt of the vehicle seat.

### Technical problem. Raised

So, it would be desirable to get a system which is integrated into the vehicle itself, allowing, through opening or closing a part of the back, a child, a baby or and adult to travel comfortably in a proper way, and both enjoing the same comfort and safety when setting cut for a journey.
For this purpose, this invention is focused on the ration of a hole in the back seat of the vehicle that allows, at any time, a child or and adult to travel according the need of that moment, and, therefore, being a child on place, as the general rule of the read picks, up, according to their age, and sometimes causing confusion when locating those who are under age.

### Technical advantage the invention brings.

This invention refers to a new safety and coupling system for babies and children, embodied into the vehicle back seat itself, so increasing comfort as you can enjoy the car upholstery itself and, on the other hand, it increases safety, since it is a system set by the vehicle equipment itself.

There is no risk for the system to be thrown off, either, and besides it allows enlarging the age of children in order to use the seat, as they get older, they will use more height of the hole back, even making use of the headrest itself that the back seat has for adults.

Besides, the system has got a built-in safety belt, and also a system to recline the back with the purpose of more lying for children or babies, according to the circumstances of it.

### Description of figures

The mechanism of the safety and coupling system for babies and children, integrated into the vehicle back seat, is the following: The hole (1) works as a back for babies and children, and it is obtained when getting the back of the vehicle seat down, and this one works as a seat for babies and children.
The back (2) becomes a seat, thanks to the iron plate (3), which works as a hinge and a stop for the bolt (4) which at the time golds the support bars of the seat (5). The iron plate (3) is fixed to the bar (6) which contains the back (1), and holds the support bars (7) for this one. The iron plate (3) gets the seat (2) to fit some centimetres under the back (1), so allowing to short the seat length.

The headrest (9) holders (8) allow this one to move forward for adults to use, or move back, for children to use, as they are growing.
On the other hand, the bars (7) hold two kinds of hinges (11 and 12), fastened at the other end to the metal frame (13), where the whole back seat of the vehicle is supported. The hinge (11) consists of a rotatory wheel, and the hinge (12) is composed of two sidepieces joined together by a belt which allows stretching or shortening such sidepieces. All of them allow lying down the back a little (1) pulling a handle (10) which is fixed to the seat.

The safety belt has got three parts: the forwer two ones are composed of the straps (14), for the fixing of shoulders and waist, the third one (15) acts as a fixing for the crotch.

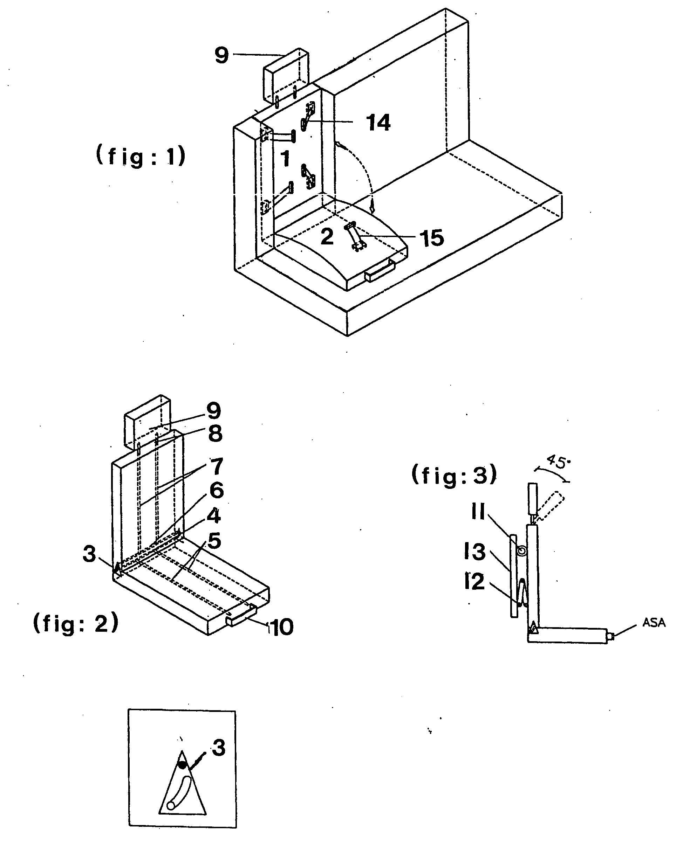

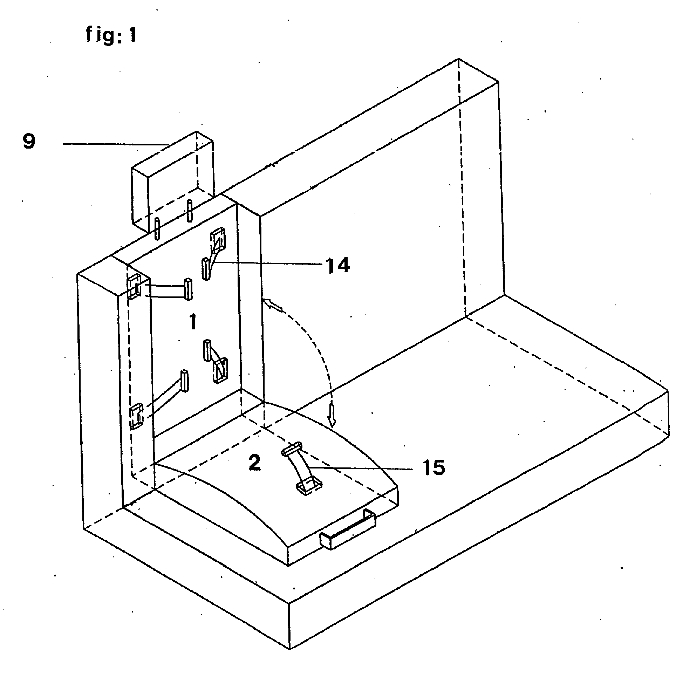

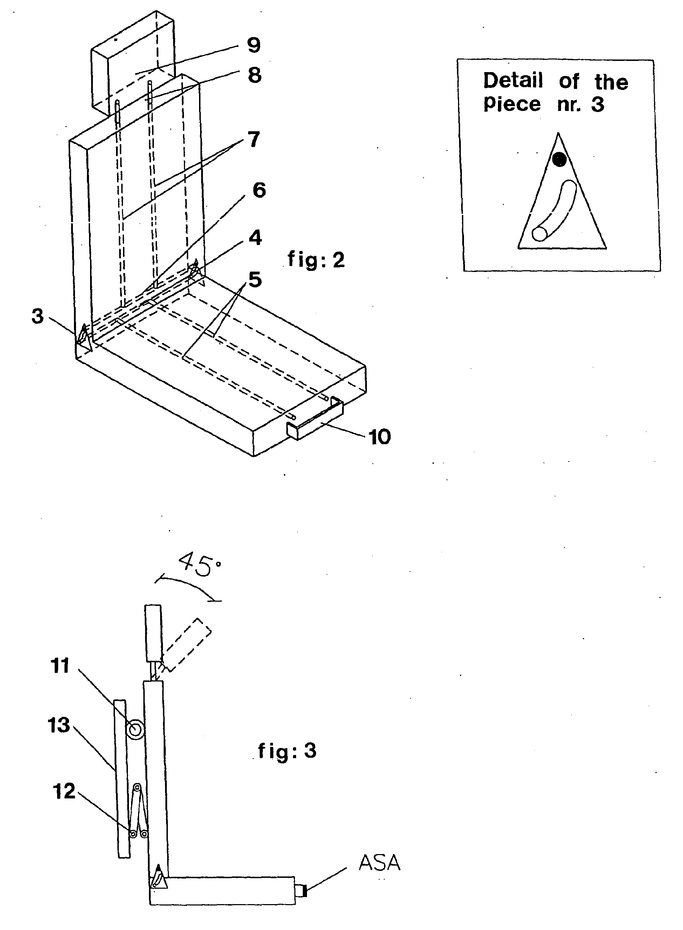

## Claims

1. Safety and coupling system for babyes and children in vehicles, formed by a seat (2) and a back (1), with the special chazacteristio that:
- the seat is obtained through the vehicle seat back itself.

2. Safety and coupling system for babyes and children in vehicles, according to claim (1), in which a part of the vehicle seat back (2) is reclined in order to remain as a saddle (2) for the baby, through some hinges (4) placed at each side of the saddle.

3. Safety and coupling system for babyes and children in vehicles, according to claim 1 and 2, in which when reclining a part of the vehicle seat back (2) it is created a hole which is a back for the baby.

4. Safety and coupling system for babyes and children in vehicles, according to claim 1, **characterized** because the back (1) is a folding seat thanks to the hinges (13 and 14).

5. Safety and coupling system for babyes and children in vehicles, according to claim 1, which provides a safety belt (17 and 18).
